# EUROPEAN PATENT SPECIFICATION

(11) **EP 0 835 401 B1**
(45) Date of publication and mention of the grant of the patent: **06.03.2002**
(21) Application number: 95916889.9
(22) Date of filing: 12.04.1995
(51) Int. Cl.: F16K 3/26, F16K 23/00, B65D 3/02

(54) **LIQUID VALVE**
FLÜSSIGKEITSVENTIL
ROBINET A LIQUIDE

(30) Priority: 15.04.1994 SE 9401285
(43) Date of publication of application: 15.04.1998
(73) Proprietor: AKTIEBOLAGET ELECTROLUX, 105 45 Stockholm (SE)
(72) Inventor: WRANGBERTH, Jan, Stellan, S-561 00 Huskvarna (SE); ANDERSSON, Mats, Torbjörn, S-561 39 Huskvarna (SE)
(74) Representative: Erixon, Bo
(86) International application number: SE9500395
(87) International publication number: WO9528586

(56) References cited:
- FR-A- 2 477 520
- SE-B- 438 020
- PATENT ABSTRACTS OF JAPAN, Vol. 11, No. 94, M-574; & JP,A,61 244 973 (NIPPON TELEGR & TELEPH CORP), 31 October 1986.

## Description

The present invention refers to a liquid valve and more specifically to a valve adapted to block and open, respectively, for liquid passage, said valve comprising a first part adapted to be fixed to a supporting member and a second part being slidably movable with respect to the first part.

Liquid valves of the kind referred to are commonly used in all situations where there is a need for controlling the supply of liquid to a container, or the discharge thereof. In domestic appliances of all kinds liquid valves can be found of the kind where post-dripping after the valve has been closed is prevented. Such valve can be used e.g. in an electric coffee maker in which dripping from a brewing filter funnel is prevented when the funnel is moved from its position above the vessel in which the brewed coffee is collected.

Another case where a drip-proof liquid valve can be used is in connection with a tumbler dryer in which a damp-condenser, associated with the tumbler dryer, is disposed in an access door to the treatment room of the machine. In this application a condensate collecting container is provided in the lower part of the machine body itself and the condensing water from the condenser is conducted to the container via a liquid valve of a construction such that post-dripping is prevented when the door is opened.

The document JP 61244973, Abstract Vol. 11, No. 94, M-574, discloses a valve device adapted to block and open, respectively, for liquid passage. A first part of the valve is adapted to be connected to a supporting member and a second part of the valve is adapted to coaxially enclose said first part and to be slidably movable with respect to said first part between a valve open position and a valve closed position, respectively. An intermediate blockage is provided in a liquid passage channel provided in the first valve part and lateral openings are provided on both sides adjacent said blockage. A corresponding flow connection link is provided to interconnect the two lateral openings in the valve open position.

Accordingly, the object of the invention is to provide a valve of the kind referred to above having a design such that no liquid can escape after the valve has closed. The object is achieved by a valve incorporating the features indicated in claim 1. Preferred embodiments are to be found in the appending sub-claims.

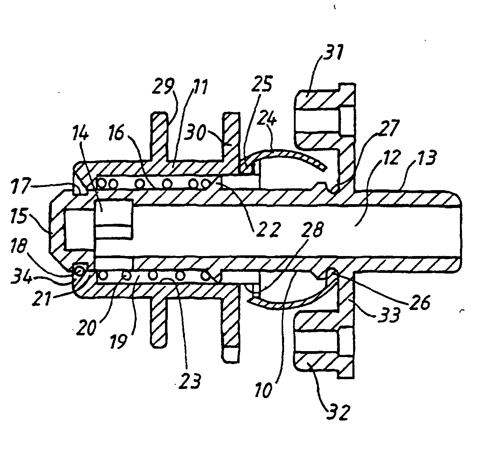

The invention will now be described more in detail in connection with an embodiment with reference to the accompanying drawing in which the single figure shows a cross section through a valve embodying the invention.

In principle, the valve comprises two main parts, a first part 10 and a second part 11 coaxially enclosing the first part. The first part 10 has an interior channel 12 for the passage of liquid from a conduit, not shown, which connects to a corresponding connecting portion 13, and to an opening 14. The first part 10 is closed at the end 15 where the opening 14 is positioned. Further, the first part is provided with an exterior surface 16 of a circular cross section. In the area between the end 15 and the opening 14 an annular groove 17 is cut in the exterior surface 16 in which an O-ring 18 is provided.

The first part 10 and the second part 11, coaxially surrounding the first part, defines together an annular space 19 in which a helical spring 20 is provided. The space 19 is limited by an annular flange 21 extending from the part 11 to the part 10 and bearing against the surface 16, and further, by an annular flange 22 extending from the part 10 to the part 11 and bearing against the cylindrical interior surface 23 thereof. The flanges 21 and 22 have the twofold purpose of constituting a stop for the helical spring 20 at the same time as they control the mutual movement between the parts 10 and 11.

The part 10 has a greater extension than the part 11 in the direction of the channel 12 and in order to prevent liquid from passing the flange 22 and leaking out a bellows gasket 24, made of rubber or the like, is provided. At its ends the bellows gasket 24 is provided with sealing beads 25, 26 clamped in corresponding grooves 27, 28 provided in the first and second parts 10, 11, respectively.

The second part 11 has an annular projecting flange 29 which can be operated by any suitable operating means for displacment of the part 11 on the part 10. Further, the part 11 has an additional annular projecting flange 30 provided to cooperate with projections 31, 32 provided on a corresponding flange 33 on the part 10. The flange 30 and the projections 31, 32 cooperate to limit the movement of the part 11 to the right in the figure, i.a. for avoiding damage to the bellows gasket 24.

In the sealing area, at the end 15 of the part 10, the O-ring 18 cooperates with a conical surface 34 provided on the corresponding end of the part 11. The surface has got its conical shape in order that in the sealing state of the valve the O-ring be pressed against the bottom of the groove 17 by the helical spring 20 for amplification of the sealing effekt.

By means of the projections 31, 32 and suitable screws or the like the valve can be secured to a supporting member which, like in the previous example with the tumbler dryer, can be the access door (not shown) of the dryer.

When the passage through the valve is to be established the flange 29 is operated by means of a suitable operating means, for instance an edge or the like provided adjacent to an opening of the condensate collecting container in the machine body of the tumbler dryer referred to above, such that the part 11 is dispaced to the right in the figure against the action of the helical spring 20. The part 11 is displaced so far to the right that the opening 14 is uncovered permitting liquid to pass the valve via the connecting portion 13, the channel 12 and the opening 14 to the condensate collecting container, not shown, in the tumbler dryer itself.

Should the access door be opened after a treatment cycle in the tumbler dryer, or during such cycle, the flange 29 will no longer be acted upon which means that by the action of the spring 20 the part 11 will be moved to the left in the figure until the conical surface 34 reaches the O-ring 18 pressing said O-ring towards the bottom of the groove 17 and thereby bringing into operation the seal formed by the O-ring 18 and the conical surface 34.

It should be understood that by placing the seal in the area between the opening 14 and the closed end 15 of the part 10 an optimum sealing effect will be achieved and that any water that possibly remains in the valve will effectively be prevented from leaking out when the access door is opended in the tumbler dryer given as an example. Accordingly, a valve of a design as described would be classified as, in the real sense, drop-proof.

## Claims

1. A valve adapted to block and open, respectively, for liquid passage, said valve comprising a first part (10) adapted to be fixed to a supporting member and a second part (11) coaxially enclosing the first part (10) and slidably movable with respect to the same between an open valve position and a closed valve position, respectively, said first part (10) having a channel (12) for the liquid passage, with an inlet opening (13) and an outlet opening (14) with an associated closed end (15) of channel (11), whereby the valve includes , sealing means (17,18,34) adapted to provide, when the valve is in its closed position, a sealing between the first and second parts (10,11) in the area between the outlet opening (14) and the closed end (15) of the channel (11), **characterized by** the outlet opening (14) being disposed at a distance from said closed end (15) of the channel (11) and by the sealing means being configured to seal between the first and second parts so as to completely close all liquid conveying parts of the valve when the valve is in its closed position.

2. A valve according to claim 1, **characterized in that** spring means (20) are provided for biasing the second part (11) towards the closed end (15) of the first part (10), said sealing means comprising an 0-ring (18) disposed in a groove (17) in the first part (10) adjacent to the closed end (15) of said first part, said 0-ring cooperating with an annular edge (34) on the second part (11) for forming of the sealing.

3. A valve according to claim 2, **characterized in that** the annular edge (34) has a conical shape such that, under the influence of the spring means (20), the 0-ring is pressed towards the bottom of the groove (17).

4. A valve according to any of the preceding claims, **characterized in that** the first and second parts (10,11) are separated by an annular space (19) limited by flange-shaped portions (21,22) which are directed towards the respective part (10,11), said annular space containing a helical spring (20), the flange-shaped portions (21,22) being arranged to control the displacement of the second part (11) on the first part (10) and to act as a stop for the helical spring (20).

5. A valve according to claim 4, **characterized in that** the first part (10) has a greater extension in the direction of the channel (12) than the second part (11), the second part (11), at its end opposite the sealing area, being sealed against the first part (10) by means of a bellows gasket (24) or the like.

6. A valve according to any of the preceding claims, **characterized in that** the second part (11) is provided with a radially projecting flange (29) arranged to cooperate with an operating means for the displacement of the second part (11) on the first part (10) to a position where the opening (14) is uncovered.

7. A valve according to claim 5 or claim 6, **characterized in that** the second part (11), at its end opposite the sealing area, is provided with a stop flange (30) adapted, together with a corresponding stop flange (31,32,33) provided on the first part (10), to limit the movement of the second part (11) on the first part (10) in a direction away from the sealing area.

## Patentansprüche

1. Ventil, welches angepasst ist, um den Durchfluss von Flüssigkeiten zu sperren bzw. für diesen zu öffnen, welches ein erstes Teilstück (10), das zur Anbringung an ein Stützbauteil angepasst ist, und ein zweites Teilstück (11) umfasst, welches das erste Teilstück (10) koaxial umschließt und bezüglich diesem gleitend bewegbar zwischen einer geöffneten Ventilstellung und einer geschlossenen Ventilstellung angeordnet ist, wobei das erste Teilstück (10) einen Kanal (12) für den Durchfluss von Flüssigkeiten mit einer Einlassöffnung (13) und einer Auslassöffnung (14) mit einem zugehörigen geschlossenen Ende (15) des Kanals (12) aufweist und wobei das Ventil Dichtvorrichtungen (17,18,34) enthält, welche angepasst sind, um, wenn das Ventil in der geschlossenen Stellung ist, eine Dichtung zwischen dem ersten und zweiten Teilstück (10,11) in dem Gebiet zwischen der Auslassöffhung (14) und dem geschlossenen Ende (15) des Kanals (12) zu bewirken, **dadurch gekennzeichnet, dass** die Auslassöffnung (14) in einem Abstand von dem geschlossenen Ende (15) des Kanals (12) angeordnet ist und dass die Dichtvorrichtungen um zwischen dem ersten und dem zweiten Teilstück abzudichten so gestaltet sind, dass all flüssigkeitsführenden Teile des Ventils vollständig geschlossen sind, wenn sich das Ventil in der geschlossenen Stellung befindet.

2. Ventil nach Anspruch 1, **dadurch gekennzeichnet, dass** es eine Federvorrichtung (20) enthält, um das zweite Teilstück (11) gegen das geschlossene Ende (15) des ersten Teilstücks mechanisch vorzuspannen, wobei die Dichtvorrichtungen einen O-Ring (18) umfassen, welcher in einer Aussparung (17) im ersten Teilstück (10) angrenzend an das geschlossene Ende (15) des ersten Teilstücks (10) angeordnet ist, und wobei der O-Ring mit der ringförmigen Kante (34) des zweiten Teilstückes (11) zusammenwirkt, um die Dichtung zu bewirken.

3. Ventil nach Anspruch 2, **dadurch gekennzeichnet, dass** die ringförmige Kante (34) eine konische Form hat, so dass der O-Ring unter dem Einfluss der Federvorrichtung (20) gegen den untersten Teil der Aussparung (17) gedrückt wird.

4. Ventil nach einem der vorangehenden Ansprüche, **dadurch gekennzeichnet, dass** das erste und das zweite Teilstück (10,11) durch einen ringförmigen Raum (19) getrennt sind, welcher durch Flansch-artige Bauteile (21,22), welche zu dem jeweiligen Teilstück (10,11) gerichtet sind, begrenzt wird, wobei der ringförmige Raum eine schraubenförmige Feder (20) enthält, und wobei die Flansch-artigen Bauteile (21,22) so angeordnet sind, dass sie die Verschiebung des zweiten Teilstücks (11) auf dem ersten Teilstück (10) kontrollieren und als Anschlag für die schraubenförmige Feder (20) wirken.

5. Ventil nach Anspruch 4, **dadurch gekennzeichnet, dass** das erste Teilstück (10) eine größere Ausdehnung in Richtung des Kanals (12) als das zweite Teilstück (11) hat, wobei das zweite Teilstück (11) an seinem dem Dichtungsbereich entgegengesetztem Ende gegen das erste Teilstück (10) durch eine Balgdichtung (24) oder dergleichen abgedichtet wird.

6. Ventil nach einem der vorangehenden Ansprüche, **dadurch gekennzeichnet, dass** das zweite Teilstück (11) einen kreisfärmig vorstehenden Flansch (29) aufweist, der so angeordnet ist, dass er mit einer Betätigungsvorrichtung zusammenwirkt, um das zweite Teilstück (11) auf dem ersten Teilstück (10) in eine Position, in der die Öffnung (14) frei ist, zu verschieben.

7. Ventil nach Anspruch 5 oder 6, **dadurch gekennzeichnet, dass** das zweite Teilstück (11) an seinem dem Dichtungsbereich entgegengesetzten Ende mit einem Anschlag-Flansch ausgestattet ist, der angepasst ist, um zusammen mit den entsprechenden Anschlag-Flanschen (31,32,33), welche auf dem ersten Teilstück (10) angeordnet sind, die Bewegung des zweiten Teilstückes (11) auf dem ersten Teilstück (10) in der von dem Dichtungsbereich wegweisenden Richtung zu begrenzen.

## Revendications

1. Vanne apte à bloquer et respectivement à ouvrir le passage à des liquides, ladite vanne comprenant une première pièce (10) apte à être fixée à un élément de support, et une seconde pièce (11) entourant coaxialement la première pièce (10) et apte à être déplacée en translation par rapport à celle-ci entre une position d'ouverture de vanne et respectivement une position de fermeture de vanne, ladite première pièce (10) comportant un canal (12) destiné au passage de liquides, comportant une ouverture d'entrée (13) et une ouverture de sortie (14) avec une extrémité fermée associée (15) du canal (12), la vanne comprenant des moyens d'étanchéité (17, 18, 34) aptes à réaliser, lorsque la vanne est dans sa position de fermeture, une étanchéité entre les première et seconde pièces (10, 11), dans la zone comprise entre l'ouverture de sortie (14) et l'extrémité fermée (15) du canal (12), **caractérisée par le fait que** l'ouverture de sortie (14) est disposée à une certaine distance de ladite extrémité fermée (15) du canal (12) et **par le fait que** les moyens d'étanchéité sont configurés de manière à assurer l'étanchéité entre les première et seconde pièces, de façon à fermer complètement toutes les parties de la vanne transportant du liquide, lorsque la vanne est dans sa position de fermeture.

2. Vanne selon la revendication 1, **caractérisée en ce que** des moyens de ressort (20) sont installés en vue de pousser la seconde pièce (11) en direction de l'extrémité fermée (15) de la première pièce (10), ledit moyen d'étanchéité comprenant un joint torique (18) disposé dans une gorge (17) située dans la première partie à proximité de l'extrémité fermée (15) de ladite première partie, ledit joint torique coopérant avec un bord annulaire (34) situé sur la seconde pièce (11) pour réaliser l'étanchéité.

3. Vanne selon la revendication 2, **caractérisée en ce que** le bord annulaire (34) a une forme conique, si bien que, sous l'influence du moyen de ressort (20), le joint torique est pressé en direction du fond de la gorge (17).

4. Vanne selon l'une quelconque des revendications précédentes, **caractérisée en ce que** les première et seconde pièces (10, 11) sont séparées par un espace annulaire (19) limité par des parties (21, 22) en forme de collets qui sont orientées en direction de la pièce respective (10, 11), ledit espace annulaire contenant un ressort hélicoïdal (20), des parties (21, 22) en forme de collets étant disposées pour commander le déplacement de la seconde pièce (11) sur la première pièce (10) et pour jouer le rôle de butées pour le ressort hélicoïdal (20).

5. Vanne selon la revendication 4, **caractérisée en ce que** la première pièce (10) a une plus grande extension dans la direction du canal (12) que la seconde pièce (11), la seconde pièce (11), à son extrémité opposée à la zone d'étanchéité, étant rendue étanche contre la première pièce (10), au moyen d'un joint à soufflet (24) ou d'un joint similaire.

6. Vanne selon l'une quelconque des revendications précédentes, **caractérisée en ce que** la seconde pièce (11) est munie d'un collet (29) faisant saillie radialement disposé pour coopérer avec un moyen d'actionnement en vue du déplacement de la seconde pièce (11) sur la première pièce (10) jusqu'à un emplacement où l'ouverture (14) n'est pas recouverte.

7. Vanne selon la revendication 5 ou la revendication 6, **caractérisée en ce que** la seconde pièce (11), à son extrémité opposée à la zone d'étanchéité, est munie d'un collet de butée (30) apte, avec un collet de butée (31, 32, 33) correspondant ménagé sur la première pièce (10), à limiter le déplacement de la seconde pièce (11) sur la première pièce (10) dans une direction qui s'écarte de la zone d'étanchéité.
